# FASCICULE DE BREVET EUROPEEN

(11) **EP 3 094 858 B1**
(45) Date de publication et mention de la délivrance du brevet: **18.03.2020**
(21) Numéro de dépôt: 15700574.5
(22) Date de dépôt: 15.01.2015
(51) Int. Cl.: F04D 13/16, F03B 3/10, F03B 13/06

(54) **PROCEDE D'INSTALLATION D'UNE STATION DE TRANSFERT D'ENERGIE PAR POMPAGE DITE "MARINE" ET STATION CORRESPONDANTE**
VERFAHREN ZUR INSTALLATION EINER SO GENANNTEN MARINE-PUMPENSPEICHER-WASSERKRAFTANLAGE SOWIE ENTSPRECHENDE ANLAGE
METHOD FOR INSTALLING A SO-CALLED "MARINE" PUMPED-STORAGE HYDROELECTRIC POWER STATION AND CORRESPONDING STATION

(30) Priorité: 17.01.2014 FR 1450390
(43) Date de publication de la demande: 23.11.2016
(73) Titulaire: Chantiers de l'Atlantique, 44600 Saint Nazaire Cedex (FR)
(72) Inventeur: COULON, Eric, F-44730 Saint Michel Chef Chef (FR)
(74) Mandataire: Regimbeau
(86) Numéro de dépôt international: PCT/EP2015/050628
(87) Numéro de publication internationale: WO 2015/107097

(56) Documents cités:
- EP-A1- 2 722 482
- EP-A2- 1 930 597
- WO-A1-2009/020386
- DE-A1-102011 012 594
- JP-A- S58 204 208
- MA-B1- 32 739
- US-A- 2 246 472
- US-A- 4 275 989
- US-A- 4 540 313

## Description

La présente invention se rapporte à un procédé d'installation d'une station de transfert d'énergie par pompage, dite "STEP marine".

Elle concerne également une telle station de transfert.

Le monde actuel de l'énergie est en profonde évolution, avec une augmentation forte de la consommation dans les pays comme la Chine, l'Inde ou l'Asie du Sud-est. Cette augmentation de la consommation se fait aussi sentir, de manière plus modérée, dans les pays occidentaux d'Europe de l'Ouest et d'Amérique du Nord.

A cette augmentation s'ajoute un bouleversement du parc de production d'électricité avec l'arrivée du pic de croissance des énergies d'origine fossile.

Enfin, les événements intervenus en 2011 à Fukushima ont une influence directe sur les politiques énergétiques de bon nombre de pays : diminution du nucléaire (Suisse, Allemagne, Japon) et développement des énergies intermittentes.

L'augmentation de la variation de la demande et le développement des énergies renouvelables intermittentes comme l'éolien ou le photovoltaïque nécessitent de nouvelles solutions permettant de mieux gérer l'équilibre entre production et consommation.

Outre les techniques de prévisions pour les énergies intermittentes et une meilleure gestion du réseau, de la consommation et de la production, les solutions de stockage d'énergie peuvent contribuer à l'équilibre du système.

A l'heure actuelle, les solutions de stockage stationnaire de type batterie sont peu développées du fait de la taille requise pour les installations. Par ailleurs, le stockage par air comprimé présente des rendements médiocres.

En revanche, le stockage hydraulique (pompage-turbinage), qui représente d'ores et déjà la très grande majorité du stockage de masse dans le monde, semble avoir toute sa place pour répondre aux nouveaux défis énergétiques.

Le principe de fonctionnement d'une STEP (acronyme de "Station de Transfert d'Energie par Pompage") comprend deux phases, l'une de pompage de l'eau d'un bassin inférieur vers un bassin supérieur (c'est à dire placé à une altitude plus élevée) lorsque l'on cherche à stocker de l'énergie, et l'autre de turbinage de l'eau du bassin supérieur vers le bassin inférieur lorsque l'on cherche à produire de l'électricité.

Outre d'un bassin supérieur et d'un bassin inférieur, une STEP est composée d'une usine hydro-électrique apte à fonctionner comme un ensemble pompe-moteur pour pomper de l'eau dudit bassin inférieur vers ledit bassin supérieur ou comme un ensemble turbine-alternateur pour produire de l'électricité par largage de l'eau, dudit bassin supérieur vers ledit bassin inférieur. Elle est également constituée d'une conduite dite « forcée » reliant ledit bassin supérieur à ladite pompe-turbine de l'usine hydro-électrique et d'une conduite dite « avale » reliant le bassin inférieur à ladite pompe-turbine de l'usine hydro-électrique.

Le cas d'une STEP "marine" est semblable à celui d'une STEP "classique", dite "terrestre", si ce n'est que le bassin inférieur est remplacé par la mer ou l'océan.

Au niveau mondial, 99% des capacités de stockage d'énergie stationnaire sont assurées par les STEP (source : Rapport sur l'industrie des énergies décarbonées - 2010).

En Europe, on dénombre actuellement 40 GW de capacités installées de STEP (représentant 30% de la capacité mondiale des STEP). Quatre GW de capacités sont actuellement en construction et l'on prévoit une augmentation de la capacité européenne de 35% entre 2010 et 2020. Le marché des STEP connaît donc un essor important qu'il n'avait plus connu depuis les années 80, en lien notamment avec le développement et l'optimisation du parc nucléaire.

En dehors de l'Europe, c'est en Asie que le marché connaît la plus forte croissance, puisque la capacité installée aura doublé entre 2005 (25 GW) et 2020 (50 GW). Les projections permettent d'évaluer le besoin mondial en stockage de masse entre 500 et 1000 GW à l'horizon 2030/2040, du fait du développement de la pénétration des énergies renouvelables intermittentes, dont une grande partie restera assurée par des STEP , le reste étant assuré par la technique dite "CAES" (pour "Compressed Air Energy Storage"), qui est en devenir.

Le développement des STEPs terrestres en Europe sera contraint, dans les années à venir, par le fait que les meilleurs sites ont déjà été équipés et par le contexte environnemental.

Par ailleurs, les circuits hydrauliques des STEPs terrestres (c'est à dire la longueur des conduites entre les bassins) sont relativement longs et ne permettent pas d'atteindre des temps de réponses courts (inférieurs à 10 s). Les STEPs marines s'affranchissent de ce problème et permettent de minimiser le coût et les impacts environnementaux, tout en offrant des implantations à proximité des champs d'éoliennes off shore.

La STEP marine est par conséquent une technique qui permettrait a priori d'assurer un relais aux STEP terrestres.

Toutefois, le constat suivant est réalisé :
L'idée qui vient tout naturellement est de réaliser une STEP marine sur la base d'un schéma industriel identique à celui de la réalisation d'une STEP terrestre, et donc notamment avec les contraintes suivantes :
- l'usine hydro-électrique est installée partiellement sous terre, en caverne ou en puits ;
- les équipements principaux (pompes, turbines, alternateurs, transformateurs...) sont acheminés sur site par voie terrestre, ce qui nécessite des moyens de transports importants ;
- Les coûts et délais sont très dépendants de la géologie et typographie du site, entrainant des risques financiers importants pour le projet, ce que n'aiment pas les investisseurs.

On connaît par le document EP1930597 une machine à vis d'Archimède qui permet de pomper un liquide d'un niveau inférieur vers un niveau supérieur, ou de générer de l'énergie lorsque le liquide s'écoule de haut en bas.

Cette machine comporte un socle qui est positionné au fond de l'eau de la retenue la plus basse. Le socle comporte un conduit à l'intérieur duquel est logée une vis d'Archimède. A l'extrémité supérieure de l'axe de rotation de cette vis est monté un moteur électrique. Un tuyau fait communiquer l'extrémité supérieure du conduit au niveau d'eau supérieur.

Un tel dispositif ne constitue pas une STEP au sens de l'invention.

Un état de la technique additionnel est constitué par les documents US 2246472 et JP S58204208.

La présente invention a pour but de pallier ces inconvénients énumérés et détaillés plus haut.

Ainsi, selon un premier aspect, celle-ci concerne un procédé d'installation d'une station de transfert d'énergie par pompage, dite "STEP marine", qui comporte :
- une retenue d'eau située en altitude relativement au niveau de la mer ;
- une usine hydro-électrique configurée pour fonctionner comme un ensemble pompe-moteur pour pomper de l'eau de la mer vers ladite retenue d'eau, ou comme un ensemble turbine-alternateur pour produire de l'électricité par relargage de l'eau, de la retenue vers la mer, via au moins une conduite reliant ladite retenue d'eau à ladite usine hydro-électrique,
caractérisé par le fait que :
- l'on fait usage d'une usine hydro-électrique qui se présente sous la forme d'au moins un caisson dont au moins la partie inférieure est étanche ;
- que l'on achemine ledit caisson jusqu'au "pied" de ladite retenue d'eau ;
- que l'on immobilise en mer ledit caisson ;
- et que l'on le relie à ladite conduite.

Selon d'autres caractéristiques non limitatives et avantageuses de de ce procédé :
- ledit caisson est immobilisé en mer alors qu'il est partiellement immergé ;
- l'acheminement dudit caisson est réalisé par placement de celui-ci à la surface de l'eau et traction par au moins une embarcation motrice ;
- l'acheminement dudit caisson est réalisé par placement de celui-ci sur une barge ;
- l'on fait usage d'un caisson duquel fait saillie au moins un tuyau de raccordement à ladite conduite ;
- préalablement à l'immobilisation dudit caisson, on met en place une assise solidaire du fond marin, sur laquelle ledit caisson est ultérieurement amené ;
- l'on met ultérieurement en place un moyen de protection du caisson, tel qu'une digue, un brise-lames flottant, ou un système de protection intégré au caisson.

D'autres caractéristiques et avantages de l'invention apparaîtront à la lecture de la description détaillée qui va suivre. Elle sera faite en référence aux dessins annexés dans lesquels :
- les figures 1 et 2 sont des vues simplifiées en coupe, selon un plan vertical et longitudinal, de deux formes de réalisation d'une station de transfert d'énergie par pompage, selon l'art antérieur ;
- la figure 3 est une vue simplifiée en coupe, selon un plan vertical et longitudinal, d'une forme de réalisation d'une station de transfert d'énergie par pompage, dite « STEP marine »;
- la figure 4 est une vue en perspective d'un élément inférieur d'un caisson formant usine hydro électrique, utilisé dans la cadre de la présente invention ;
- la figure 5 est également une vue en perspective montrant plusieurs éléments inférieurs d'un caisson, de tailles différentes, ainsi que des éléments supérieurs destinés à les recouvrir ;
- la figure 6 est une vue en perspective d'un caisson utilisé dans la cadre de l'invention et obtenu par la réunion d'un ou plusieurs éléments supérieur et inférieur tels que ceux de la figure précédente ;
- la figure 7 est une vue en coupe, selon un plan vertical et transversal, d'un caisson ;
- la figure 8 est une vue en perspective d'un caisson mis à l'eau et remorqué par deux embarcations motrices ;
- la figure 9 est une vue en coupe, selon un plan vertical et longitudinal, d'une assise située en bord de mer, « au pied » de la retenue d'eau et adaptée pour recevoir un caisson tel que celui est représenté à la figure 8 ;
- la figure 10 est une vue en coupe, également selon un plan vertical et longitudinal, de l'extrémité "distale" de la conduite de la station, c'est à dire de celle qui est destinée à être reliée au caisson ;
- enfin, la figure 11 est une vue de dessus d'un caisson, ainsi que d'une digue de protection de celui-ci.

Dans l'ensemble de la description qui va suivre, lorsque l'on utilisera le vocable "station de transfert d'énergie par pompage", en abrégé "STEP", on entendra, sauf mention contraire, qu'il s'agit d'une STEP marine.

Par ailleurs, on utilisera indifféremment les terminologies "retenue d'eau" et "bassin supérieur".

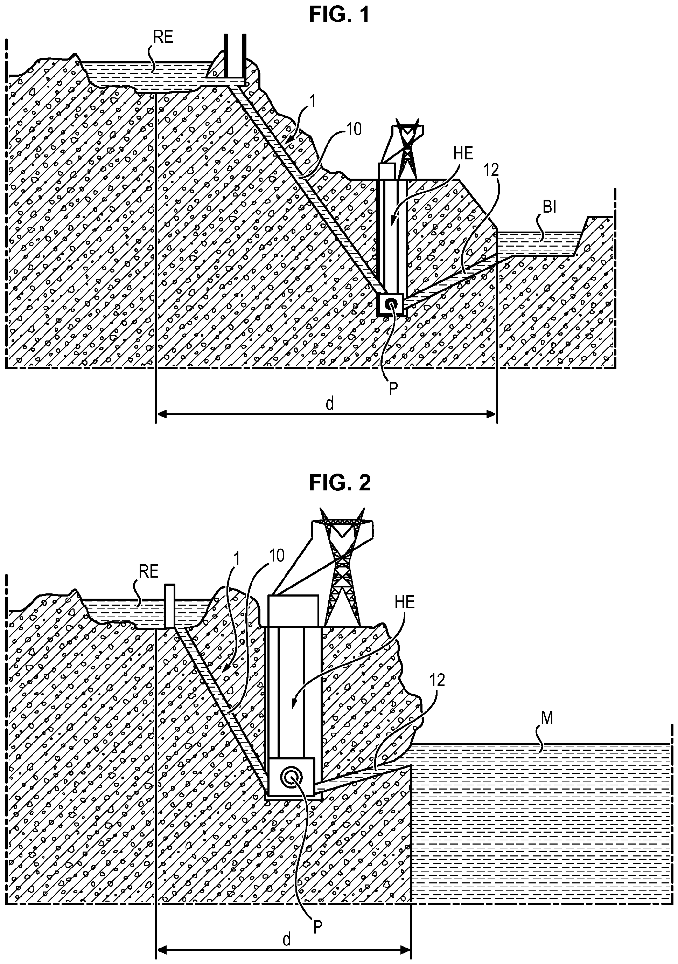

Les figures 1 et 2 représentent respectivement une STEP terrestre et une STEP marine selon l'état de l'art.

Ainsi, comme illustré aux figures 1 et 2, les pompes-turbines P des usines hydro-électriques HE sont installées sous terre, en caverne ou en puits, reliés au bassin supérieur RE par une conduite forcée 10 et au bassin inférieur BI ou à la mer M par une conduite avale 12. Des postes électriques, tableaux électriques et transformateurs, sont installés dans des bâtiments « postes électriques » situés au-dessus des pompes-turbines associées.

On note la présence d'un puits 3 équipé d'un ascenseur, qui permet notamment à des opérateurs d'accéder à la pompe-turbine ou de s'engager dans la conduite, afin de vérifier leurs états et de procéder à leur entretien, si besoin.

A titre indicatif, la distance d qui sépare la retenue d'eau supérieure RE au bassin inférieur BI est de l'ordre de quelques milliers de mètres. Cette distance, dans le cadre d'une STEP marine, est de l'ordre de quelques centaines de mètres.

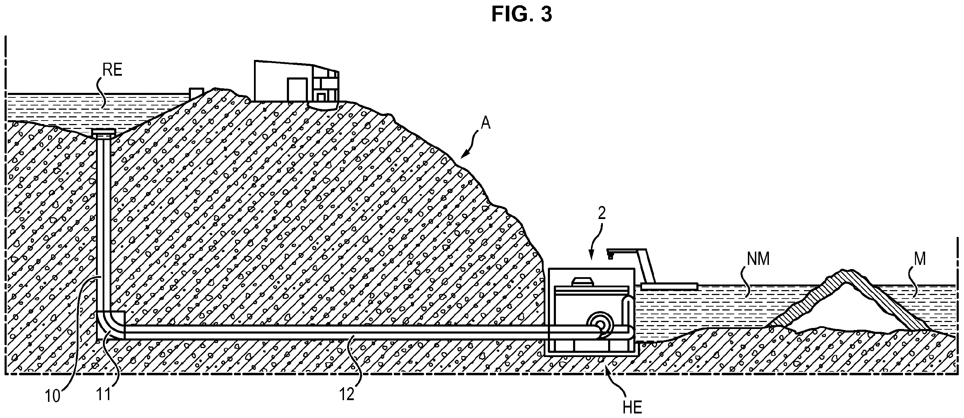

Comme précisé plus haut, la figure 3 annexée représente une STEP marine utilisable dans le cadre de l'invention.

Ainsi, comme illustré à la figure 3, la station est installée en bord de mer, le long d'une côte A formant falaise.

De manière connue, sur la partie haute de la côte est présente une retenue d'eau RE qui peut être naturelle ou artificielle. Elle est donc située en altitude par rapport au niveau NM de la mer M. A titre indicatif, le dénivelé correspondant peut être compris entre 50 et 300 mètres.

Une conduite 1 relie le fond de la retenue RE à un caisson 2.

Cette conduite, qui est dimensionnée en fonction du niveau d'énergie que l'on souhaite produire, comprend une "branche" verticale 10 dont l'extrémité supérieure débouche dans la retenue RE et une "branche" horizontale 12 qui débouche dans le caisson.

Cette branche 12 dite « avale » peut avoir une autre disposition. Elle peut par exemple être inclinée.

Les branches précitées sont bien entendu réunies par une portion intermédiaire courbe 11.

Les techniques de creusement et d'aménagement de cette conduite sont bien connues de l'homme de l'art et ne seront donc pas décrites davantage.

A la figure 3 est également visible une usine hydro-électrique HE qui est disposée en mer, "au pied" de la retenue RE, ce qui signifie qu'elle est directement reliée à l'extrémité libre (ou distale) de la branche 12 de la conduite 1. Cette usine prend la forme du caisson 2 précité.

On reviendra plus en détail, plus loin dans la description, sur la structure de l'usine et son mode de fabrication.

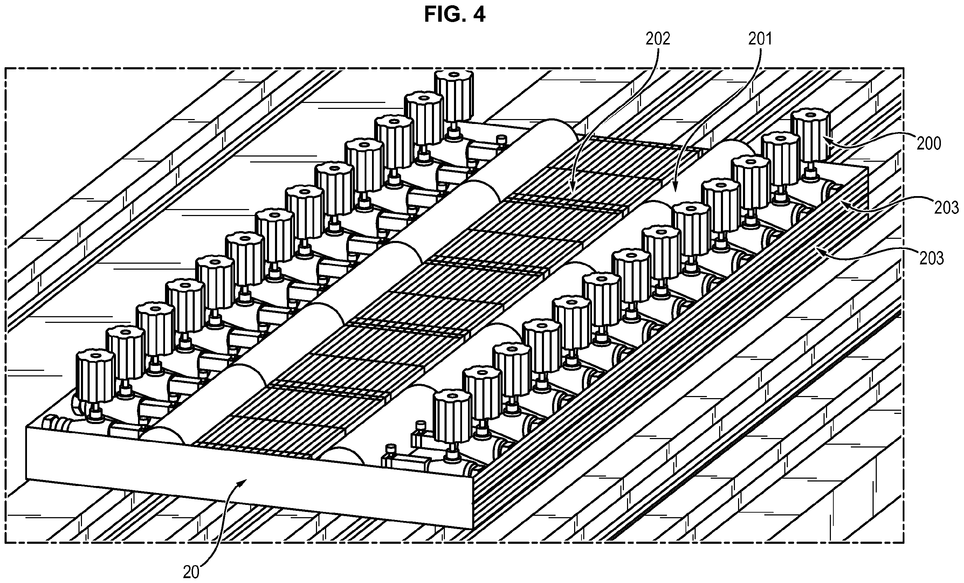

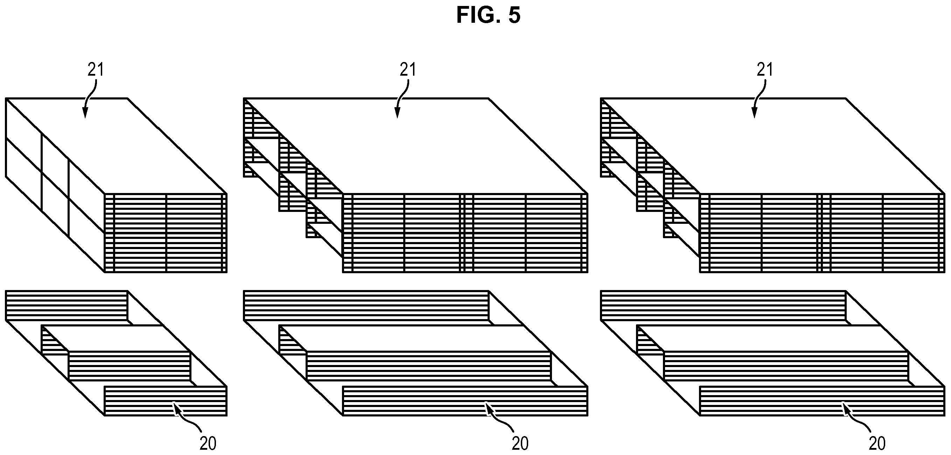

Ainsi que cela est particulièrement visible aux figures 4 à 7 notamment, l'usine hydro-électrique HE apte à être utilisée dans le cadre de la présente invention a la forme d'un caisson 2, préférentiellement métallique, qui est étanche au moins dans sa partie inférieure. Ce caisson est préférentiellement réalisé en assemblant des blocs de structure préfabriqués. Ceci permet notamment une installation simple et rapide des gros équipements (système d'énergie et systèmes auxiliaires) composant l'usine hydro-électrique HE, qui peut s'organiser au fur et à mesure de l'assemblage des blocs, comme le montre la figure 5.

Sur cette figure et à la figure 4 également, le caisson 2 comporte au moins un élément inférieur 20 (ici trois éléments sont représentés) qui s'inscrit dans un parallélépipède rectangle. Il comporte un fond et des parois verticales longitudinales et transversales. Il est donc ouvert vers le haut.

Cet élément inférieur renferme une partie des équipements habituels d'une usine hydro-électrique, et notamment des pompes-turbines 200, des tableaux électriques, des transformateurs, des systèmes de ventilation, de production d'eau douce, de drainage, etc. L'élément 201 visible à la figure 4 est un tronçon de conduite interne au caisson et l'élément 230 un tronçon de conduite externe au caisson pour le raccordement à la conduite 1. Des canalisations 203 permettent de pomper l'eau de mer vers la conduite 1 ou de rejeter l'eau depuis la conduite 1 vers la mer M lorsque l'usine hydro-électrique HE fonctionne respectivement comme un ensemble pompe-moteur ou comme un ensemble turbine-alternateur.

Bien entendu, comme montré à la figure 5, chaque élément inférieur 20 est destiné à recevoir un élément supérieur 21 qui le recouvre, l'ensemble formant alors un caisson.

Les liaisons entre les éléments 20 et 21 sont assurées par tout moyen connu permettant d'assurer l'étanchéité du caisson 2, notamment par soudage.

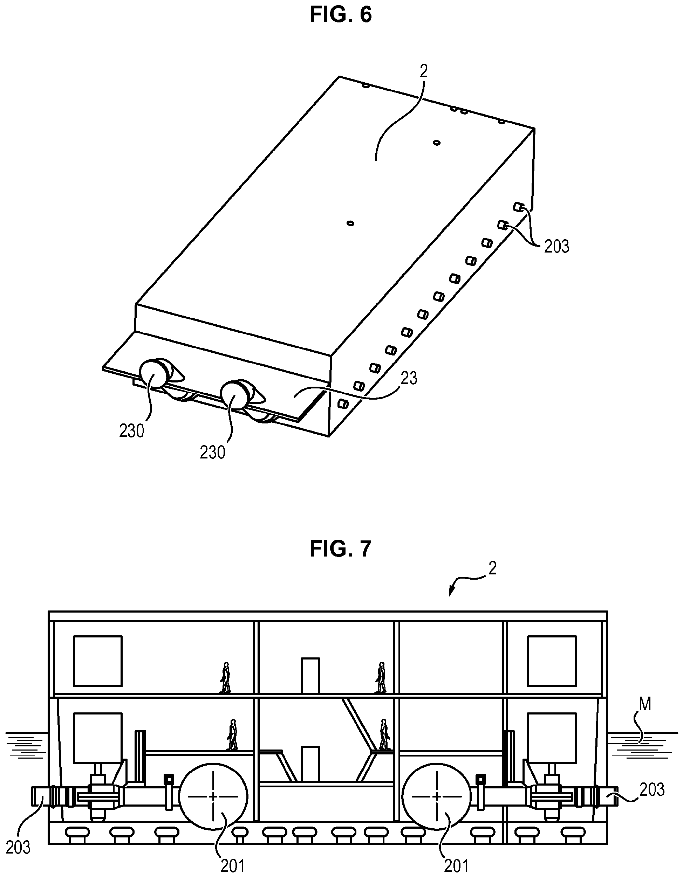

A la figure 6 est visible un caisson 2 en perspective. On notera que le long d'une de ses faces transversales s'étend une plaque 23, parallèle à ses faces supérieure et inférieure. Cette plaque sert de plateforme d'accès au caisson 2 pour des opérateurs ou d'embarquement/débarquement de matériels. Cette plaque sert aussi de moyen de support à une paire de tuyaux 230 de raccordement dont on expliquera ultérieurement la fonction.

Il a été dit plus haut qu'au moins la partie inférieure des caissons est étanche. En effet, comme on le verra plus loin, cette partie inférieure est destinée à s'étendre en dessous du niveau NM de la mer M. Toutefois et de préférence, la totalité de la surface du caisson est prévue étanche.

L'une des étapes du procédé selon l'invention réside dans le fait que l'on achemine le caisson 2 jusqu'au "pied" de la retenue d'eau.

Ceci peut être fait par tout moyen adapté.

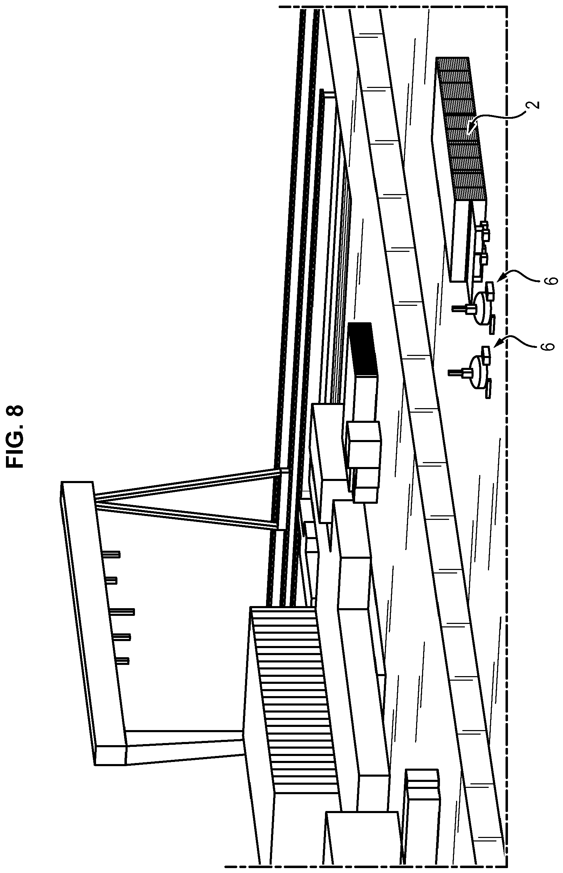

Cependant et de manière particulièrement préférée, l'acheminement est réalisé par placement du caisson à la surface de l'eau et traction par au moins une embarcation motrice. C'est ce qui a été représenté à la figure 8, où deux embarcations 6 apparaissent.

Dans une autre variante préférée mais non représentée, l'acheminement se fait au moyen d'une barge sur laquelle le caisson a été préalablement déposé.

Là encore, on constate que la "préfabrication" de caissons 2 sur un chantier naval est particulièrement adaptée puisqu'il est pourvu de moyens de levage adaptés et de quais de mise à l'eau.

L'acheminement se fait donc jusqu'au "pied" de la retenue RE.

L'étape suivante consiste à immobiliser le caisson en mer.

Ceci peut se faire par tout moyen connu.

Toutefois, on préfère faire usage d'une assise solidaire du fond marin, sur laquelle le caisson est ultérieurement amené.

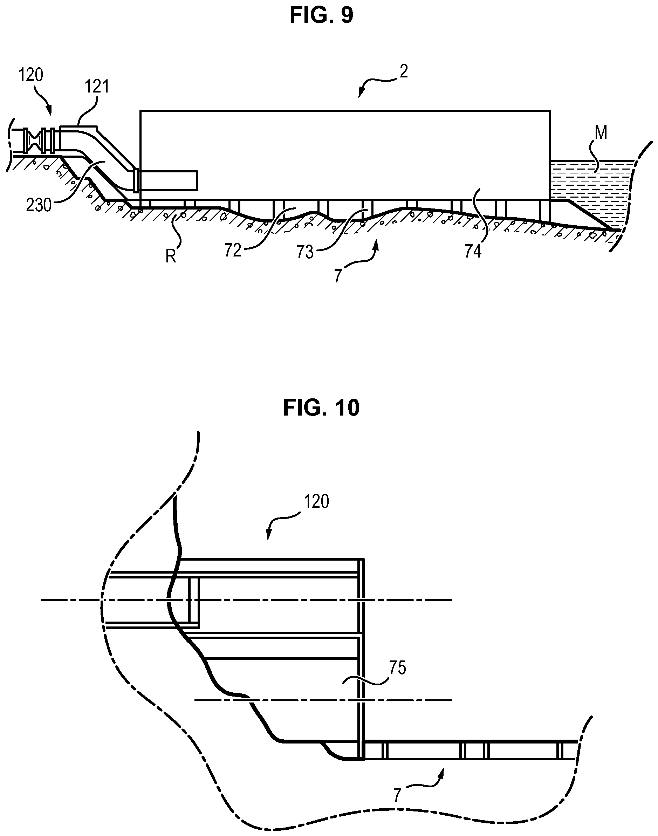

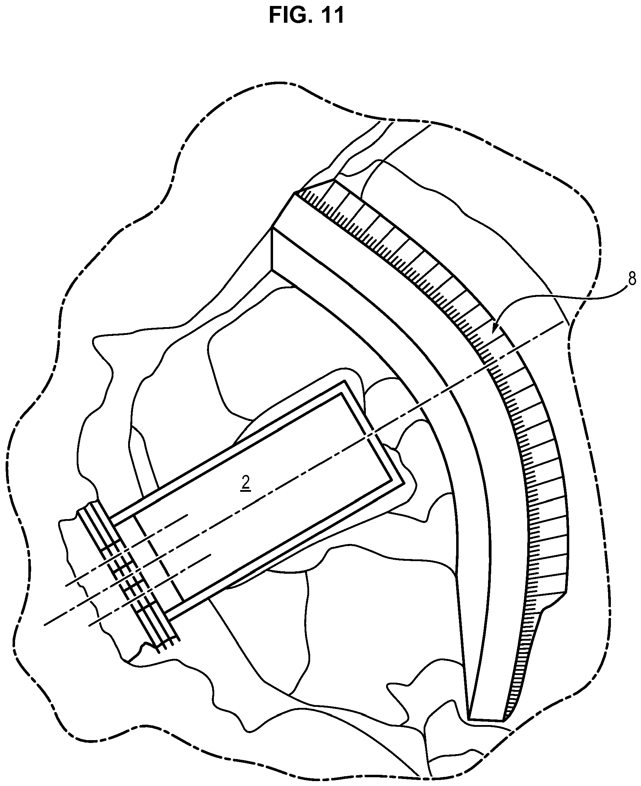

Un exemple d'une telle assise 7 est visible aux figures 9 et 11. Elle est solidaire du fond marin R constitué de rochers. Elle comprend du remblai 72, des poteaux en béton 73, une structure métallique de réglage ou une dalle en béton armé 74.

Il est clair que la fabrication de cette assise a été faite préalablement à l'arrivée du caisson.

La mise en place de ce dernier se fait par ballastage et/ou lestage.

Avantageusement et comme illustré à la figure 9, l'extrémité distale libre 120 de la conduite 1 est stabilisée par sa traversée au sein d'un plot 121 en béton.

Le raccordement du caisson à la conduite peut alors être effectué.

La station peut ensuite être utilisée comme décrit dans l'introduction de la présente.

A la figure 10 est représentée une forme de réalisation différente de l'extrémité distale 120 qui prend appui directement sur une embase 75 en béton et en assure la stabilité.

Enfin, à la figure 11 est montré un système de protection du caisson 2 qui, ici, consiste en une digue 8. Il pourrait s'agir par exemple d'un brise-lames flottant ou d'un système de protection intégré au caisson.

Bien entendu, en fonction de la puissance de l'usine RE, il est envisageable d'utiliser plusieurs caissons 2 arrimés les uns aux autres et disposés en série ou en parallèle.

En considérant que la préfabrication des caissons apporte de nombreux avantages industriels par rapport à un chantier in-situ, notamment dans un contexte insulaire, que la situation géographique d'une STEP marine offre la possibilité d'acheminer par mer n'importe quel "colis", sans limite de taille ou de poids (à la stabilité du "colis" près) et que l'implantation d'une usine hydro-électrique à terre, en bord de côte, est soumise à des contraintes environnementales très fortes (Loi Littoral en France), alors le procédé selon l'invention permettant de concevoir et préfabriquer une usine hydro-électrique sous la forme d'un caisson métallique dans un chantier naval industriel, pour ensuite l'acheminer par mer en pied de falaise, l'y installer et n'avoir plus qu'à la connecter à la retenue d'eau, présente de nombreux avantages par rapport à la réalisation d'une usine terrestre classique (en puits ou en caverne.)

Cela permet notamment de s'affranchir des difficultés suivantes :
- acheminement, au fil du chantier de construction, des différents équipements sur un site dont l'accès est forcément difficile (zone insulaire, bord de mer peu accessible, etc.) ;
- réalisation des travaux de type génie civil (puits, caverne) ou génie maritime (prise d'eau) dans un environnement difficile (notamment si les caractéristiques géologiques sont défavorables, comme c'est le cas en Guadeloupe ;
- réseau industriel local non adapté à des travaux lourds ;
- vérification du bon fonctionnement de l'usine et mise en route tardives et risquées ;
- pas d'industrialisation globale possible.

La préfabrication de l'usine hydro-électrique sous forme d'un caisson métallique garantit l'obtention d'un produit de qualité, d'un délai de réalisation maîtrisé, d'un coût optimisé, ainsi que la possibilité de développer une filière industrielle.

La mise en oeuvre du procédé selon l'invention a recours à des techniques connues en soi et éprouvées, qui sont réadaptées à ce cas particulier. Elles font appel à des études combinées d'architecture navale, de calcul de structure et de résistance des matériaux, de génie maritime, de logistique, et d'autres études spécifiques (anti corrosion, antisalissure...).

L'usine préfabriquée remplit à la fois les fonctions de pompage, de turbinage, et de production d'électricité - et constitue, par la même, le cœur même de la STEP marine. Elle peut être livrée pratiquement "clef en main" (bon fonctionnement testé).

D'autres avantages sont cités ci-après :
- l'usine reposant directement au sein du bassin inférieur (la mer), on s'affranchit de toute conduite avale ;
- la puissance est ajustable et évolutive en fonction du nombre de caissons que l'on peut rajouter les uns aux autres.

De façon plus spécifique, l'usine présente les avantages suivants :
1. Usine compacte grâce à son caractère préfabriqué ;
2. Usine transportable pour sa mise en place, comme pour son démantèlement. Ceci est très important, compte-tenu des contraintes environnementales de plus en plus fortes qui pèsent sur les opérations de démantèlement ;
3. Usine de type "Plug-in" (connexion rapide aux différents réseaux terrestres : fluides, électricité...) ;
4. Le caisson métallique immergé en eau de mer conçu pour une durée de vie minimum de 50 ans (sans passage en cale sèche).

Enfin, on peut également considérer que l'installation même de l'usine en pied de falaise revêt des aspects avantageux :
1. Fixation du caisson au sol par méthode gravitaire ;
2. Conception d'une digue capable de résister à des conditions environnementales de type cyclonique en zone non abritée ;
3. Réalisation de l'ensemble des travaux dans une fenêtre météorologique très courte (inférieure à 6 mois).

## Revendications

1. Procédé d'installation d'une station de transfert d'énergie par pompage, dite "STEP marine", qui comporte :
- une retenue d'eau (RE) située en altitude relativement au niveau de la mer (M) ;
- une usine hydro-électrique (HE) configurée pour fonctionner comme un ensemble pompe-moteur pour pomper de l'eau de la mer (M) vers ladite retenue d'eau (RE), ou comme un ensemble turbine-alternateur pour produire de l'électricité par relargage de l'eau, de la retenue (RE) vers la mer (M), via au moins une conduite (1) reliant ladite retenue d'eau (RE) à la dite usine hydro-électrique (HE);
**caractérisé par le fait que** :
- l'on fait usage d'une usine hydroélectrique (HE) qui se présente sous la forme d'au moins un caisson (2) dont au moins la partie inférieure est étanche ;
- que l'on achemine ledit caisson (2) jusqu'au "pied" de ladite retenue d'eau (RE) ;
- que l'on immobilise en mer (M) ledit caisson (2) ;
- et que l'on le relie à ladite conduite (1).

2. Procédé selon la revendication 1, **caractérisé par le fait que** ledit caisson (2) est immobilisé en mer (M) alors qu'il est partiellement immergé.

3. Procédé selon la revendication 1 ou 2, **caractérisé par le fait que** l'acheminement dudit caisson (2) est réalisé par placement de celui-ci à la surface de l'eau et traction par au moins une embarcation motrice (6).

4. Procédé selon la revendication 1 ou 2, **caractérisé par le fait que** l'acheminement dudit caisson (2) est réalisé par placement de celui-ci sur une barge.

5. Procédé selon la revendication 1 ou 2, **caractérisé par le fait que** le caisson est entièrement préfabriqué et son bon fonctionnement testé.

6. Procédé selon l'une des revendications 1 à 4, **caractérisé par le fait que** l'on fait usage d'un caisson (2) duquel fait saillie au moins un tuyau (230) de raccordement à ladite conduite (1).

7. Procédé selon l'une des revendications précédentes, **caractérisé par le fait que** préalablement à l'immobilisation dudit caisson (2), on met en place une assise (7) solidaire du fond marin, sur laquelle ledit caisson (2) est ultérieurement amené.

8. Procédé selon l'une des revendications précédentes, **caractérisé par le fait que** l'on met ultérieurement en place un moyen de protection du caisson (2), tel qu'une une digue (8), un brise-lames flottant, ou un système de protection intégré au caisson.

## Patentansprüche

1. Verfahren zur Installation einer Pumpspeicher-Wasserkraftanlage, einer sogenannten "marinen STEP", umfassend:
- ein Wasserreservoir (RE), das relativ zum Meeresspiegel (M) in der Höhe angeordnet ist;
- ein Wasserkraftwerk (HE), das dafür konfiguriert ist, als Pumpe-Motor-Anordnung zu funktionieren, um Wasser aus dem Meer (M) zu dem Wasserreservoir (RE) zu pumpen, oder als Turbine-Generator-Anordnung zu funktionieren, um durch das Aussalzen des Wassers Elektrizität zu erzeugen, vom Reservoir (RE) zum Meer (M) zu pumpen über mindestens eine Rohrleitung (1), die das Wasserreservoir (RE) mit dem Wasserkraftwerk (HE) verbindet;
**dadurch gekennzeichnet, dass**
- ein Wasserkraftwerk (HE) genutzt wird, das in Form von zumindest einem Kasten (2) vorliegt, von dem zumindest der untere Teil wasserdicht ist;
- der Kasten (2) bis zum "Fuße" des Wasserreservoirs (RE) befördert wird;
- der Kasten (2) im Meer (M) immobilisiert wird;
- und er mit der Rohrleitung (1) verbunden wird.

2. Verfahren nach Anspruch 1, **dadurch gekennzeichnet, dass** der Kasten (2) im Meer (M) immobilisiert wird, während er teilweise versenkt ist.

3. Verfahren nach Anspruch 1 oder 2, **dadurch gekennzeichnet, dass** die Beförderung des Kastens (2) durch seine Platzierung auf der Wasseroberfläche und die Zugförderung durch zumindest ein Antriebsschiff (6) erfolgt.

4. Verfahren nach Anspruch 1 oder 2, **dadurch gekennzeichnet, dass** die Beförderung des Kastens (2) durch seine Platzierung auf einem Frachtkahn erfolgt.

5. Verfahren nach Anspruch 1 oder 2, **dadurch gekennzeichnet, dass** der Kasten vollständig vorgefertigt und sein einwandfreier Betrieb getestet wurde.

6. Verfahren nach einem der Ansprüche 1 bis 4, **dadurch gekennzeichnet, dass** ein Kasten (2) genutzt wird, aus dem mindestens ein Rohr (230) zur Verbindung mit der Rohrleitung (1) ragt.

7. Verfahren nach einem der vorstehenden Ansprüche, **dadurch gekennzeichnet, dass** vor der Immobilisierung des Kastens (2) ein Unterbau (7) installiert wird, der fest mit dem Meeresboden verbunden ist, auf welchen anschließend der Kasten (2) gebracht wird.

8. Verfahren nach einem der vorstehenden Ansprüche, **dadurch gekennzeichnet, dass** anschließend eine Schutzeinrichtung des Kastens (2) installiert wird, wie beispielsweise ein Damm (8), ein schwimmender Wellenbrecher oder ein in den Kasten integriertes Schutzsystem.

## Claims

1. A method for installing a so-called "marine PSH plant" energy transfer plant, which includes:
- a water reservoir (RE) located at altitude relative to sea (M) level;
- a hydroelectric plant (HE) configured to operate as a pump-motor unit to pump water from the sea (M) to said water reservoir (RE), or as a turbine-alternator unit to produce electricity by releasing the water from the reservoir (RE) toward the sea (M) via at least one tube (1) connecting said water reservoir (RE) to said hydroelectric plant (HE);
**characterized by** the fact that:
- a hydroelectric plant (HE) is used which has the shape of at least one caisson (2) of which at least the lower portion is watertight;
- said caisson (2) is transported to the "root" of said water reservoir (RE);
- said caisson (2) is immobilized in the sea (M);
- and it is connected to said tube (1).

2. The method according to claim 1, **characterized by** the fact that said caisson (2) is immobilized in the sea (M) while it is partially submerged.

3. The method according to claim 1 or 2, **characterized by** the fact that transportation of said caisson (2) is accomplished by launching it on the surface of the water and towing using at least one motor craft (6).

4. The method according to claim 1 or 2, **characterized by** the fact that transportation of said caisson (2) is accomplished by placing it on a barge.

5. The method according to claim 1 or 2, **characterized by** the fact that the caisson is entirely prefabricated and its proper operation tested.

6. The method according to one of claims 1 to 4, **characterized by** the fact that a caisson (2) is used from which at least one pipe (230) protrudes for connection to said tube (1).

7. The method according to one of the preceding claims, **characterized by** the fact that, prior to immobilization of said caisson (2), a base (7) is installed embedded in the sea bottom, onto which said caisson (2) is later brought.

8. The method according to one of the preceding claims, **characterized by** the fact that a means for protecting the caisson (2) is subsequently placed, such as a jetty (8), a floating breakwater or a protection system integrated with the caisson.
